Europäisches Patentamt

European Patent Office

Office européen des brevets

(19)

(11)    EP 1 084 168 B1

(12)    **EUROPÄISCHE PATENTSCHRIFT**

(45) Veröffentlichungstag und Bekanntmachung des Hinweises auf die Patenterteilung:
**20.08.2003   Patentblatt 2003/34**

(51) Int Cl.⁷: **C08G 18/42**

(86) Internationale Anmeldenummer:
**PCT/DE99/01505**

(21) Anmeldenummer: **99936284.1**

(22) Anmeldetag: **19.05.1999**

(87) Internationale Veröffentlichungsnummer:
**WO 99/060044 (25.11.1999 Gazette 1999/47)**

(54) **ALKYDHARZEMULSIONEN UND DEREN ANWENDUNGEN**

ALKYD RESIN EMULSIONS AND UTILIZATION OF THE SAME

EMULSIONS DE RESINE ALKYDE ET LEUR UTILISATION

(84) Benannte Vertragsstaaten:
**AT BE CH CY DE DK ES FI FR GB GR IE IT LI LU MC NL PT SE**

(30) Priorität: **19.05.1998  DE 19822468**

(43) Veröffentlichungstag der Anmeldung:
**21.03.2001   Patentblatt 2001/12**

(73) Patentinhaber: **ASH-Land-Südchemie-Kernfest Gmbh**
**42489 Wülfrath (DE)**

(72) Erfinder:
• **KUHLMANN, Peter**
  **D-42489 Wülfrath (DE)**
• **WINTER, Reinhard**
  **D-42489 Wülfrath (DE)**

(74) Vertreter: **VOSSIUS & PARTNER**
**Siebertstrasse 4**
**81675 München (DE)**

(56) Entgegenhaltungen:
**EP-A- 0 002 488**       **WO-A-93/09157**
**DE-A- 4 308 188**       **FR-A- 2 020 131**
**US-A- 3 639 315**

## Beschreibung

Die Erfindung betrifft ein Zwei-Komponenten-Wasserlacksystem und ein Verfahren zu ihrer Herstellung.

Bei herkömmlichen wäßrigen 2-Komponenten-Polyurethanlacken bildet sich aus der Nebenreaktion des Isocyanates mit Wasser $CO_2$, welches zu unerwünschter Blasenbildung in der Lackschicht führt. Nach dem derzeitigen Stand der Technik lassen sich mit derartigen Systemen je nach Grad der Pigmentierung und den Trocknungsbedingungen Schichtdicken von maximal 60 - 80 µm prozeßsicher herstellen. Dagegen zeichnet sich das erfindungsgemäße Zwei-Komponenten-Wasserlacksystem besonders durch eine geringe Blasenempfindlichkeit aus. Dadurch lassen sich Schichtdicken von mindestens 120 µm, meistens sogar von mindestens 150 µm ohne unerwünschte Blasenbildung erzielen.

Wasserverdünnbare Lacke haben aufgrund ökologischer Probleme und dem damit verbundenen Zwang zur Reduzierung von Lösungsmittelemissionen weite Verbreitung gefunden und haben in vielen Bereichen die lösungsmittelhaltigen Anstriche und Beschichtungen ersetzt.

In Bereichen mit höchsten Anforderungen an Wetterbeständigkeit, Korrosionsschutz und Chemikalienbeständigkeit haben sich wäßrige Zwei-Komponenten-Polyurethansysteme seit Jahren bestens bewährt. Diese Zwei-Komponenten-Systeme bestehen aus einer Polyolkomponente und einer Isocyanatkomponente, die erst kurz vor der Verarbeitung gemischt werden. Als Isocyanatkomponenten werden üblicherweise oligomere Polyisocyanate z.B. auf der Basis von Hexamethylendiisocyanat und Isophorondiisocyanat eingesetzt. Als Polyolkomponente werden hauptsächlich hydroxyfunktionelle Polyacrylat-Primär- und Sekundärdispersionen, wasserlösliche oder wasseremulgierbare Polyester und hydroxyfunktionelle Polyurethandispersionen eingesetzt.

Diese Lacksysteme werden mehr und mehr z.B. in der Fahrzeuglackierung und in der Kunststoff- und Möbellackierung eingesetzt. Einer weiteren Verbreitung stand bisher in vielen Fällen das Problem mangelnder Prozeßsicherheit entgegen. Insbesondere bei hohen Schichtdicken und ungünstigen klimatischen Bedingungen, wie z.B. hoher Luftfeuchtigkeit, tritt bei der Trocknung starke Blasenbildung durch $CO_2$-Entwicklung aus der Nebenreaktion des Isocyanates mit Wasser auf.

Aufgabe der vorliegenden Erfindung ist es, ein Zwei-Komponenten-Wasserlacksystem zur Verfügung zu stellen, das eine geringe Neigung zur Blasenbildung aufweist und das geeignet ist blasenfreie Lackschichten mit einer Dicke von mindestens 120 µm, bevorzugt von mindestens 150 µm, herzustellen.

Diese Aufgabe wird gelöst durch ein Zwei-Komponenten-Wasserlacksystem, das eine Isocyanatkomponente und eine wäßrige Emulsion eines hydroxyfunktionellen Alkydharzes umfaßt. Das hydroxylfunktionelle Alkydharz ist erhältlich aus einer Öloder Fettsäurekomponente, einem mehrwertigen Alkohol, einem Polyetherpolyol mit einem Molekulargewicht von 400 bis 8000, einer Dicarbonsäure bzw. deren Anhydrid und gegebenenfalls einer einbasigen Carbonsäure.

Die erfindungsgemäßen Wasserlacke eignen sich für verschiedene Untergrunde wie z.B. Kunststoff, Metall und Holz.

Weiterhin stellt die Erfindung ein Verfahren zur Herstellung der erfindungsgemäßen Zwei-Komponenten-Wasserlacksysteme zur Verfügung, umfassend

1. Bereitstellung einer Isocyanatkomponente,
2. Herstellung einer wäßrigen Emulsion eines hydroxyfunkcionellen Alkydharzes umfassend

a) Umsetzung einer Öl- oder Fettsäurekomponente, eines mehrwertigen Alkohols, eines Polyetherpolyols mit einem Molekulargewicht von 400 bis 8000, einer Dicarbonsäure bzw. deren Anhydrid und gegebenenfalls einer einbasigen Carbonsäure zu einem hydroxyfunktionellen Alkydharz,
b) Neutralisation des Alkydharzes mit Ammoniak oder Aminen,
c) Emulgieren des Alkydharzes in Wasser.

Alkydharzemulsionen ähnlicher Form sind bereits prinzipiell beschrieben z.B. in der Patentschrift US-A-3,442,835, werden aber bisher ausschließlich als Bindemittel in Luft- und ofentrocknenden Einkomponentenlacken eingesetzt. Ein-Komponenten- und Zwei-Komponentenlacke unterscheiden sich insbesondere im Qualitätsniveau wesentlich voneinander. Zweikomponenten-Polyurethanlackierungen sind sowohl in den mechanischen Eigenschaften, wie Elastizität und Härte, aber auch in den Beständigkeiten gegen Wetter, Lösungsmittel und Umwelteinflüsse den lufttrocknenden Einkomponentenlackierungen auf Alkydbasis deutlich überlegen (s. Farbe & Lack 2/98, Seite 85).

Das erfindungsgemäße Alkydharz wird aus einer Öl- oder Fettsäurekomponente, einem mehrwertigen Alkohol, einem Polyetherpolyol mit einem Molekulargewicht von 400 bis 8000, einer einbasigen Carbonsäure und einer Dicarbonsäure bzw. deren Anhydrid hergestellt.

Vorzugsweise enthält das Alkydharz 10 bis 70 Gew.-%, insbesondere 15 bis 40 Gew.-% einer Öl- oder Fettsäurekomponente, 10 bis 35 Gew.-%, insbesondere 10 bis 30 Gew.-% eines mehrwertigen Alkohols mit 2 bis 6 Hydroxylgruppen, 3 bis 15 Gew.-%, insbesondere 3 bis 8 Gew.-% eines Polyetherpolyols mit einem Molekulargewicht von 400 bis 8000, insbesondere 1000 bis 6000, 0 bis 25 Gew. -%, insbesondere 10 bis 20 Gew.-% einer einbasigen Carbonsäure mit 6 bis 18 Kohlenstoffatomen und 10 bis 35 Gew.-%, insbesondere 15 bis 30 Gew.-% einer Dicarbonsäure mit 4 bis 10 Kohlenstoffatomen oder deren Anhydrid. Gegebenenfalls kann bei der Herstellung des hydroxyfunktionellen Alkydharzes bis zu 10 Gew.-% einer mehrbasigen Carbonsäure, wie z.B. Trimellithsäure oder deren Anhydrid vorhanden sein.

Als Öl- oder Fettsäurekomponente werden bevorzugt natürliche Öle oder deren Fettsäuren, insbesondere nicht-trockende Öle oder deren Fettsäuren, die sich durch gute wetterbeständigkeit und geringe Vergilbungsneigung auszeichnen verwendet. Die erfindungsgemäß verwendeten nicht-trocknenden Öle umfassen alle natürlich vorkommenden Öle, die üblicherweise bei der Herstellung von Alkydharzen verwendet werden. Der Ausdruck "nicht-trocknendes Öl" bedeutet dabei ein Triglycerid von Fettsäuren, die üblicherweise 10 bis 24 Kohlenstoffatome pro Molekül besitzen und eine Jodzahl von <110 aufweisen. Gemische sind von der Erfindung mitumfaßt.

Geeignete Öle schließen pflanzliche Öle, wie Aprikosenkernöl, Erdnußöl, Kapoköl, Kokosöl, Mandelöl, Olivenöl, Palmöl, Rizinusöl ein. Bevorzugt ist Erdnußöl, Kokosöl, Rizinusöl.

Die erfindungsgemäß verwendete Menge Öl kann von 10 bis 70 Gew.-%, vorzugsweise von 15 bis 40 Gew.-% des Endprodukts variieren.

Der Ausdruck Öle schließt auch Ester von Fettsäuren mit 10 bis 24 Kohlenstoffatomen mit Triolen, wie Trimethylolethan, Trimethylolpropan ein, wobei das Molverhältnis von Fettsäure zu Triol 3:1 beträgt. Gemäß der vorliegenden Erfindung können die Öle als solche oder als esterbildende Vorstufen, wie Fettsäuren und Triole eingesetzt werden, wobei der Ester in situ gebildet wird. Ferner können Gemische verschiedener Öle als Öl- oder Fettsäurekomponente eingesetzt werden.

Die einbasige Carbonsäure, die erfindungsgemäß verwendet wird, besitzt 6 bis 18 Kohlenstoffatome pro Molekül und schließt gesättigte aliphatische Säuren, gesättigte cycloaliphatische Säuren und aromatische Säuren ein. Typische Beispiele sind Isodecansäure, Isooctansäure, Cyclohexansäure, Cyclopentansäure, Benzoesäure, p-tert. -Butylbenzoesäure und langkettige Fettsäuren, abgeleitet von Stoffen, wie Kokosnußöl, Palmkernöl, Babassuöl und anderen auf dem Fachgebiet bekannten Fetten und Ölen. Ebenso können Gemische dieser Säuren verwendet werden. Vorzugsweise werden Benzoesäure und p-tert.-Butylbenzoesäure verwendet. Die Menge der erfindungsgemäß verwendeten Säuren beträgt etwa 0 bis etwa 25 Gew.-%, vorzugsweise etwa 10 bis etwa 20 Gew.-% des Alkydharzes. Gemische der einbasigen Carbonsäure sind von der Erfindung mitumfaßt.

Die erfindungsgemäß verwendeten Dicarbonsäuren oder ihre Anhydride besitzen 4 bis 10 Kohlenstoffatome pro Molekül und schließen aliphatische, cycloaliphatische und aromatische Dicarbonsäuren und ihre Anhydride ein. Beispiele für diese Säuren bzw. Anhydride sind Maleinsäure, Fumarsäure, Terephthalsäure, Isophthalsäure, Adipinsäure, Glutarsäure, Azelainsäure und Phthalsäure bzw. die Anhydride dieser Verbindungen. Die Mengen, die erfindungsgemäß verwendet werden, betragen etwa 10 bis etwa 35 Gew.-%, vorzugsweise etwa 15 bis etwa 30 Gew.-% des Alkydharzes. Besonders bevorzugt werden Phthalsäure, Isophthalsäure und Adipinsäure als Dicarbonsäure bzw. Anhydrid verwendet. Gemische der Dicarbonsäure sind erfindungsgemäß mitumfaßt.

Die erfindungsgemäß verwendeten mehrwertigen Alkohole besitzen wenigstens 2, jedoch nicht mehr als 6 Hydroxylgruppen pro Molekül und 2 bis 8 Kohlenstoffatome. Beispiele dieser mehrwertigen Alkohole schließen Ethylenglykol, Diethylenglykol, Glycerin, Trimethylolethan, Trimethylolpropan, Pentaerythrit, Dipentaerythrit, Sorbitol, Mannitol und ähnliche mehrwertige Alkohole, die zur Herstellung von Alkydharzen verwendet werden können, ein. Gemische dieser mehrwertigen Alkohole können verwendet werden. Besonders bevorzugte mehrwertige Alkohole sind Glycerin, Pentaerythrit und Trimethylolpropan. Gemische mehrwertiger Alkohole liegem im Rahmen der Erfindung.

Zur besseren Emulgierbarkeit werden in das Alkydharz etwa 3 bis etwa 15 Gew.-%, vorzugsweise etwa 3 bis etwa 8 Gew.-% Polyetherpolyole, wie Polyethylenglykol, Polypropylenglykol oder Polytetrahydrofuran einkondensiert. Vorzugsweise besitzen die erfindungsgemäß verwendeten Polyoxyethylenglykole eine lange Kette wiederkehrender Oxyethyleneinheiten mit einer Hydroxylgruppe an jedem Ende der Kette. Das bevorzugte mittlere Molekulargewicht der verwendeten Polyglykole beträgt etwa 400 bis etwa 8000, vorzugsweise etwa 1000 bis etwa 6000. Gemische von Polyetherpolyolen sind erfindungsgemäß mitumfaßt.

Wie in der Alkydharzchemie üblich, kann das Alkydharz nach dem Einstufen- oder Zweistufenverfahren hergestellt werden.

Beim Einstufenverfahren werden Öl- oder Fettsäurekomponente, Monocarbonsäure, mehrwertige Carbonsäure, bzw. das Anhydrid mit den Polyalkoholen und dem Polyetheralkohcl bei Temperaturen von 180 bis 260°C so lange verestert, bis eine Säurezahl von 3 bis 80 KOH/g, bevorzugt von 8 bis 20 KOH/g, erreicht ist.

Beim Zweistufenverfahren geht man üblicherweise vom natürlich vorkommenden Öl aus und setzt dieses bei Temperaturen von 180 bis 260°C mit Polyalkoholen, um bis der gewünschte Umesterungsgrad erreicht ist. In der zweiten Stufe wird unter Wasserabspaltung dieses Reaktionsprodukt mit den Monound Polycarbonsäuren sowie dem Polyetheralkohol bei 200°C bis 260°C verestert, bis eine Säurezahl von 3 bis 80 mg KOH/g, bevorzugt von 8 bis 20 KOH/g, erreicht ist. Die Säurezahl kann nach einem Verfahren gemäß DIN 53402 ermittelt werden.

Für den Fall, daß die Öl- oder Fettsäurekomponente in situ aus Vorstufen, z.B. Fettsäure und Triol, gebildet wird, ist ein Einstufenverfahren bevorzugt.

Vorzugsweise liegt der Hydroxylgehalt des erfindungsgemäßen Alkydharzes bei 1 bis 8 Gew.-% bezogen auf das Alkydharz. Harze mit niedrigem Hydroxylgehalt benötigen geringere Mengen des teuren Isocyanates zur Härtung, während Harze mit höherem Hydroxylgehalt höhere Isocyanatmengen benötigen, sich aber durch höhere Chemikalienbeständigkeit auszeichnen. Der Hydroxylgehalt kann, wie auf dem Fachgebiet üblich, durch Umsetzung mit Essigsäureanhydrid bestimmt werden.

Zur Erhöhung des Ausgangs-Molekulargewichts und zur Verbesserung der physikalischen Trocknung bzw. zur schnelleren Antrocknung kann das Alkydharz mit Isocyanaten vorvernetzt werden. Bei der Modifizierung des hydroxyfunktionellen A1-kydharzes mit Isocyanat sollen jedoch nicht mehr als 30 % der verfügbaren Hydroxylgruppen umgesetzt werden.

Zur Modifizierung des hydroxyfunktionellen Alkydharzes durch Vorvernetzung mit Isocyanat können Mono-, Di- oder Triisocyanate alleine, oder im Gemisch eingesetzt werden. Beispiele für die erfindungsgemäß verwendeten Isocyanate schließen Toluol-2,4-diisocyanat, Toluol-2,6-diisocyanat, 3-Phenyl-2-ethylendiisocyanat, 1,5-Naphthalindiisocyanat, Cumol-2,4-diisocyanat, 4-Methoxy-1,3-diphenyldiisocyanat, 4-Chlor-1,3-phenyldiisocyanat, Diphenylmethan-4,4'-diisocyanat, Diphenylmethan-2,4'-diisocyanat, Diphenylmethan-2,2'-diisocyanat, 4-Brom-1,3-phenyldiisocyanat, 4-Ethoxy-1,3-phenyldiisocyanat, 2,4'-Diisocyanatodiphenylether, 5,6-Dimethyl-1,3-phenyldiisocyanat, 2,4-Dimethyl-1,3-phenyldiisocyanat, 4,4'-Diisocyanatodiphenylether, 4,6-Dimethyl-1,3-phenyldiisocyanat, 9,10-Anthracendiisocyanat, 2,4,6-Toluoltriisocyanat, 2,4,4'-Triisocyanatodiphenylether, 1,4-Tetramethylendiisocyanat, 1,6-Hexamethylendiisocyanat, 1,10-Decamethylendiisocyanat, 1,3-Cyclohexylendiisocyanat, 4,4'-Methylen-bis(cyclohexylisocyanat), Xyloldiisocyanat, 1-Isocyanato-3-methylisocyanato-3,5,5-trimethylcyclohexan (Isophorondiisocyanat), 1,3-Bis(isocyanato-1-methylethyl)-benzol (m-TMXDI), 1,4-Bis(isocyanato-1-methylethyl)benzol (p-TMXDI) ein. Bevorzugt werden Toluol-2,4-diisocyanat, Toluol-2,6-diisocyanat, Diphenylmethan-4,4'-diisocyanat, Diphenylmethan-2,4'-diisocyanat, Diphenylmethan-2,2'-diisocyanat, 1,6-Hexamethylendiisocyanat und Isophorondiisocyanat erfindungsgemäß eingesetzt. Die Umsetzung mit Isocyanat erfolgt üblicherweise im Temperaturbereich von 10° bis 70°C, vorzugsweise 20° bis 50°C.

Die erfindungsgemäß beanspruchten Alkydharze sind nach Neutralisation mit Ammoniak oder Aminen ohne Zusatz von Lösungsmitteln in Wasser emulgierbar. Die resultierenden Emulsionen haben üblicherweise einen Feststoffgehalt von 20 bis 70 %, vorzugsweise 30 bis 55 % und einen pH-Wert von 6 bis 9.

Die Neutralisation kann durch Zugabe einer kleinen Menge eines Neutralisationsmittels erreicht werden, wobei ein Teil oder alle Säuregruppen im Harz neutralisiert werden.

Geeignete Neutralisationsmittel, die erfindungsgemäß verwendet werden können, schließen Ammoniak, Ammoniumhydroxid und primäre, sekundäre und tertiäre Mono- oder Polyamine, einschließlich Hydroxyamine und insbesondere niedere Alkylamine ein, wie Ethylamin, Butylamin, Dimethylamin, Diethylamin, Dimethylethylamin, Dimethylisopropylamin, Diethanolamin, Triethanolamin, Aminopropanol, Dimethylaminopropanol, Tributylamin, Triethylamin, Triisopropanolamin, Ethanolamin, Dimethylethanolamin oder Butanolamin. Amine die bei Temperaturen unter 180°C, vorzugsweise 120°C flüchtig sind, sind bevorzugt. Besonders bevorzugte Amine sind Ammoniak, Triethylamin, Dimethylethylamin, Dimethylisopropylamin, Dimethylethanolamin, Ethanolamin, Diethanolamin, Triethanolamin, Aminopropanol oder Dimethylaminopropanol. Die Amine können in unverdünnter Form zugegeben werden, wobei im wesentlichen wasserfreie neutralisierte Harzprodukte erhalten werden, die praktisch unbegrenzt in Wasser verdünnt oder dispergiert werden können. Alternativ können die Harze durch Zugabe einer wäßrigen Lösung oder Dispersion von Aminen neutralisiert werden. Ebenso können anorganische Neutralisationsmittel, wie Kalium- oder Natriumhydroxid oder Carbonate verwendet werden. Auch Gemische von Neutralisationsmitteln können verwendet werden.

Das Harz wird dann auf eine gewünschte Viskosität in Wasser eingestellt, wobei eine wäßrige Dispersion mit 5 bis 55 Gew.-%, vorzugsweise 25 bis 55 Gew.-% Harzfeststoff (nicht flüchtig) erhalten wird.

Die beschriebenen Alkydharzemulsionen lassen sich anschließend mit denen in der Lackindustrie üblichen Zuschlagsstoffen, wie Pigmenten, Füllstoffen und Hilfsstoffen zu pigmentierten oder unpigmentierten Stammlacken formulieren.

Diese Alkydemulsionen zeichnen sich durch hervorragende Stabilität in pH-Wert-Bereihen von 6 bis 9 aus und sind sehr gut zur Formulierung wäßriger Zwei-Komponenten-Lacke geeignet.

Kurz vor der Verarbeitung wird dem Stammlack der Härter, das heißt das Isocyanat, zugefügt und entweder von Hand oder maschinell homogen vermischt. Als Isocyanat eignen sich die als Vorvernetzer aufgezählten Verbindungen. Besonders geeignet sind jedoch oligomere Polyisocyanate, wie sie auch in konventionellen lösungsmittelhaltigen 2K-PUR-Lacken eingesetzt werden. Es handelt sich dabei beispielsweise um Präadukte, Isocyanurate, Uretdione, Allophante usw. auf Basis von Hexamethylendiisocyanat, Isophorondiisocyanat und Toluylendiisocyanat. Daneben sind auch oligomere Polyisocyanate geeignet, die hydrophile Komponenten enthalten, und speziell für den Einsatz in Wasserlacksystemen konzipiert wurden. Derartige Isocyanatkomponenten sind z.B. in den Patenten EP 0 540 958 B1, EP 0 645 410 B1, EP 0 754 713 A2, EP 0 697 424 A1 beschrieben.

Zur Verbesserung der Einarbeitung bzw. zur Verringerung der Viskosität kann der Isocyanatkomponente ein organisches Lösungsmittel, wie z.B. ein Ester, ein Keton oder ein alkylierter Ester mehrwertiger Alkohole oder oligomerer Polyglykole, wie Methoxypropylacetat, Methoxydiglykolacetat usw. zugesetzt werden. Üblicherweise liegt die verwendete Lösungsmittelmenge im Bereich von 10 bis 40 Gew.-%, bezogen auf das eingesetzte Isocyanat.

Das Mischungsverhältnis von Stammlack und Isocyanat-Härter richtet sich nach dem Gehalt der Hydroxylgruppen in der Polyolkomponente und dem NCO-Gehalt in der Isocyanatkomponente. Die stöchiometrischen Verhältnisse werden nach dem sogenannten Isocyanat-Grundwert berechnet. Dieser definiert die Menge an Polyisocyanat die 100 Gewichtsteilen der hydroxylgruppenhaltigen Komponenten äquivalent sind.

$$\text{Isocyanat Grundwert} = \frac{42 \times 100 \times \text{OH \% in der Polyolkomponente}}{17 \times \text{NCO \% in der Isocyanatkomponente}}$$

In der Praxis hat dieser Isocyanat-Grundwert die Bedeutung eines Richtwertes. Je nach gewünschten Eigenschaften des Lacksystemes kann die Härtermenge stark variiert werden. In Wasserlacken setzt man üblicherweise deutlich höhere Isocyanatmengen ein, da z.B. Isocyanat zum Teil mit Wasser zu Polyharnstoffen reagiert und dann nicht mehr zur Vernetzung mit der Polyolkomponente zur Verfügung steht.

Diese Mischung hat je nach Zusammensetzung bei Raumtemperatur eine Verarbeitungszeit von 10 min bis zu 6 h. Die Aushärtung des Lackes erfolgt entweder bei Raumtemperatur oder unter forcierten Trocknungsbedingungen wie Erhitzen. Die Reaktion läßt sich mit den in der Polyurethanchemie üblichen Katalysatoren wie z.B. Metallsalzen, Aminen usw. beschleunigen.

Überraschenderweise lassen sich mit den erfindungsgemäßen Zwei-Komponenten-Wasserlacksystemen Lackschichten von über 120 µm und sogar über 150 µm ohne Blasenbildung auch unter klimatisch ungünstigen Trocknungsbedingungen wie höherer Luftfeuchtigkeit erreichen. Somit lassen sich mit den erfindungsgemäßen Systemen sehr hochwertige Lackierungen herstellen, die denen, die mit konventionellen lösungsmittelhaltigen 2-Komponenten-Polyurethan-Lacken hergestellten werden, insbesondere in Bezug auf Beständigkeit und mechanische Eigenschaften, z.B. Härte, Elastizität, Haftung usw. gleichkommen.

Die folgenden Beispiele erläutern die Erfindung.

**Beispiel 1**

100 g Erdnußöl, 38 g Polyethylenglykol, 78 g para-tert-Butylbenzoesäure, 75 g Pentaerythrit werden 3 h bei 230°C erhitzt. Anschließend werden 126 g Phthalsäureanhydrid und 38 g Pentaerythrit zugegeben und das Reaktionsgemisch unter Wasserabspaltung bei Temperaturen von 180 bis 250°C so lange verestert, bis eine Säurezahl von 10 bis 20 mg KOH/g erreicht ist.

Das Reaktionsgemisch wird mit Triethylamin neutralisiert und in 550 g Wasser emulgiert. Es entsteht eine feinteilige Emulsion mit einem Feststoffgehalt von ca. 45 Gew.-% und einem pH-Wert von ca. 7.

**Beispiel 2**

Mit der im Beispiel 1 beschriebenen Alkydharzemulsion wird nach der folgenden Rezeptur ein Weißlack hergestellt.

    A 33,3 Gew.-Teile Alkydemulsion aus Beispiel 1
    B 27,8 Gew.-Teile Titandioxid
    C 0,7 Gew.-Teile Dispergieradditiv
    E 26,7 Gew.-Teile Alkydemulsion aus Beispiel 1
    F 8,5 Gew.-Teile Wasser

Die Mischung A, B, und C wird über eine Rührwerkskugelmühle dispergiert. Anschließend werden die Komponenten E und F zugemischt.

**Beispiel 3**

Der nach Beispiel 2 hergestellte Stammlack wird im Verhältnis 4:1 bezogen auf das Gewicht mit einem Isocyanathärter der Zusammensetzung

    70 Gew.-Teile Polyisocyanat basierend auf Hexamethylendiisocyanat und
    30 Gew.-Teile Methoxypropylacetat

gemischt.

Die Lack/Härtermischung hat eine Verarbeitungszeit von ca. 4 h und läßt sich bis zu einer Trockenschichtdicke von 180 μm verarbeiten, ohne daß es zu unerwünschter Blasenbildung durch $CO_2$-Entwicklung kommt. Die Trocknung erfolgt über Nacht oder forciert in ca. 30 min bei 80 bis 100°C. Geeignete Untergründe sind z.B. Kunststoff, Metall und Holz.

**Beispiel 4**

Klarlack-Alkydemulsionsbasis als Möbel- oder Parkettlack

87 g Alkydemulsion aus Beispiel 1
2 g Verlaufsadditive
2 g Butyldiglykolacetat und
9 g Wasser

werden homogen vermischt.

Vor der Verarbeitung wird die Isocyanatkomponente aus Beispiel 2 im Verhältnis 3:1 zugemischt.

Der Lack läßt sich bis zu einer Trockenschichtdicke von 150 μm blasenfrei verarbeiten. Die Verarbeitungszeit beträgt ca. 4 h. Die Härtungszeit beträgt bei Raumtemperatur ca. 15 h. Forcierte Trocknung bei ca. 80°C ist möglich.

**Patentansprüche**

1. Zwei-Komponenten-Wasserlacksyscem, umfassend eine Isocyanatkomponente und eine wäßrige Emulsion eines hydroxyfunktionellen Alkydharzes, **gekennzeichnet dadurch, daß** das Alkydharz aus einer Öl- oder Fettsäurekomponente, einem mehrwertigen Alkohol, einem Polyetherpolyol mit einem Molekulargewicht von 400 bis 8000, einer Dicarbonsäure bzw. deren Anhydrid und gegebenenfalls einer einbasigen Carbonsäure erhältlich ist.

2. Zwei-Komponenten-Wasserlacksystem nach Anspruch 1 **dadurch gekennzeichnet, daß** das hydroxyfunktionelle Alkydharz einen Hydroxylgehalt von 1 bis 8 Gew.-% aufweist.

3. Zwei-Komponencen-Wasserlacksystem nach Anspruch 1 oder 2, **dadurch gekennzeichnet, daß** das hydroxyfunktionelle Alkydharz durch Umsetzung mit Isocyanat zusätzlich modifiziert ist.

4. Verfahren zur Herstellung eines Zwei-Komponenten-Wasserlacksystems nach einem der Ansprüche 1 bis 3, umfassend

1. Bereitstellung einer Isocyanatkomponente,
2. Herstellung einer wäßrigen Emulsion eines hydroxyfunktionellen Alkydharzes umfassend:

a) Umsetzung einer Öl- oder Fettsäurekomponente, eines mehrwertigen Alkohols, eines Polyetherpolyols mit einem Molekulargewicht von 400 bis 8000, einer Dicarbonsäure bzw. deren Anhydrid und gegebenenfalls einer einbasigen Carbonsäure zu einem hydroxyfunktionellen Alkydharz,
b) Neutralisation des hydroxyfunktionellen Alkydharzes mit Ammoniak oder Amin,
c) Emulgieren des hydroxyfunktionellen Alkydharzes in Wasser.

5. Verfahren nach Anspruch 4, **dadurch gekennzeichnet, daß** das Alkydharz zusätzlich mit Isocyanat umgesetzt wird.

**Claims**

1. Two-component aqueous varnish system, comprising an isocyanate component and an aqueous emulsion of a hydroxy-functional alkyd resin, **characterised in that** the alkyd resin is obtainable from an oil acid or fatty acid component, a polyhydric alcohol, a polyether polyol with a molecular weight of 400 to 8000, a dicarboxylic acid or its anhydride, and optionally a monobasic carboxylic acid.

2. Two-component aqueous varnish system according to claim 1, **characterised in that** the hydroxy-functional alkyd resin has a hydroxyl content of 1 to 8 % by weight.

3. Two-component aqueous varnish system according to claim 1 or 2, **characterised in that** the hydroxy-functional alkyd resin is additionally modified by reaction with isocyanate.

4. Method of manufacturing a two-component aqueous varnish system according to one of claims 1 to 3, comprising

    1. preparation of an isocyanate component,
    2. manufacture of an aqueous emulsion of a hydroxy-functional alkyd resin comprising:

        a) reaction of an oil acid or fatty acid component of a polyhydric alcohol, a polyether polyol with a molecular weight of 400 to 8000, a dicarboxylic acid or its anhydride, and optionally a monobasic carboxylic acid to form a hydroxy-functional alkyd resin,
        b) neutralisation of the hydroxy-functional alkyd resin with ammonia or amine,
        c) emulsification of the hydroxy-functional alkyd resin in water.

5. Method according to claim 4, **characterised in that** the alkyd resin is additionally reacted with isocyanate.

**Revendications**

1. Système de laque aqueux biconstituant comprenant un constituant isocyanate et une émulsion aqueuse d'une résine alkyde hydroxy- fonctionnelle, **caractérisé en ce que** la résine alkyde peut être obtenue à partir d'un constituant d'huile ou d'acide gras, d'un alcool polyvalent, d'un polyétherpolyol avec un poids moléculaire de 400 à 8000, d'un acide dicarboxylique respectivement d'un anhydride de celui-ci et éventuellement d'un acide carboxylique mono-acide.

2. Système de laque aqueux biconstituant selon la revendication 1, **caractérisé en ce que** la résine alkyde hydroxy-fonctionnelle présente une teneur en groupe hydroxyle de 1 à 8 % en poids.

3. Système de laque aqueux biconstituant selon la revendication 1 ou 2, **caractérisé en ce que** la résine alkyde hydroxy-fonctionnelle est de plus modifiée par réaction avec un isocyanate.

4. Procédé pour la préparation d'un système de laque aqueux biconstituant selon l'une des revendications 1 à 3 comprenant :

    1. la mise à disposition d'un constituant isocyanate,
    2. la préparation d'une émulsion aqueuse d'une résine alkyde hydroxy-fonctionnelle comprenant:

        a) la réaction d'un constituant d'huile ou d'acide gras, d'un alcool polyvalent, d'un polyétherpolyol avec un poids moléculaire de 400 à 8000, d'un acide dicarboxylique respectivement d'un anhydride de celui-ci et éventuellement d'un acide carboxylique mono-acide en une résine alkyde hydroxy-fonctionnelle,
        b) la neutralisation de la résine alkyde hydroxy-fonctionnelle avec de l'ammoniaque ou une amine,
        c) l'émulsionnement de la résine alkyde hydroxy-fonctionnelle dans de l'eau.

5. Procédé selon la revendication 4, **caractérisé en ce que** la résine alkyde réagit en plus avec un isocyanate.